# EUROPEAN PATENT APPLICATION

(11) **EP 3 663 812 A1**
(43) Date of publication of application: **10.06.2020**
(21) Application number: 18210497.6
(22) Date of filing: 05.12.2018
(51) Int. Cl.: G02B 5/00, G02B 21/08, G02B 21/12

(54) **VARIABLE INCIDENCE ANGLE DARK-FIELD MICROSCOPY**

(71) Applicant: Koninklijke Philips N.V., 5656 AG Eindhoven (NL)
(72) Inventor: BOAMFA, Marius Iosif, 5656 AE Eindhoven (NL); VAN DER ZAAG, Pieter Jan, 5656 AE Eindhoven (NL); ASSELMAN, Michel Jozef Agnes, 5656 AE Eindhoven (NL); VULDERS, Roland Cornelis Martinus, 5656 AE Eindhoven (NL); VAN HOOGENHUIZEN, Rowan, 5656 AE Eindhoven (NL)
(74) Representative: de Haan, Poul Erik

(57) **Abstract**

The present invention relates to optical imaging. In order to improve the efficiency in creating the needed illumination light for an optical imaging device with dark-field imaging capabilities, an optical imaging device is provided that comprises a light source, a beam shaping optical arrangement, and a light focusing element. The light source is configured to provide a collimated beam. The beam shaping optical arrangement is configured to transform the collimated beam into a collimated hollow beam. The light focusing element is configured to focus the collimated hollow beam onto a sample for illuminating the sample at an incident angle, thereby generating scattered light to create dark-field image data of the sample. The beam shaping optical arrangement comprises a first optical element and a second optical element. The first optical element is configured to transform the collimated beam into a hollow-cone beam. The second optical element is positioned distally from the first optical element along an optical axis, and configured to transform the hollow-cone beam into the collimated hollow beam. At least one of the first optical element and second optical element is configured to be movable along the optical axis such that a size of the collimated hollow beam is adjustable to illuminate the sample at a variable incident angle.

## Description

### FIELD OF THE INVENTION

The present invention relates to optical imaging. In particular, the present invention relates to an optical imaging device, a digital pathology system, and a method of operating the optical imaging device.

### BACKGROUND OF THE INVENTION

Dark-field imaging may be used to enhance the contrast in stained or unstained samples. A cone of light is created to illuminate the specimen and the angle of the light is chosen such that the direct light does not enter directly in the imaging path. A central aperture may be used to block the central part of the illumination beam, thereby creating a cone of light.

For example, US 2016/0202460 A1 describes an optical imaging device with a spatial light modulator (SLM). The pixel transmission is turned off within the central circle of the SLM to provide a central block aperture.

### SUMMARY OF THE INVENTION

There may be a need to improve the efficiency in creating the needed illumination light for an optical imaging device with dark-field imaging capabilities.

The object of the present invention is solved by the subject-matter of the independent claims, wherein further embodiments are incorporated in the dependent claims. It should be noted that the following described aspects of the invention apply also for the optical imaging device, to the digital pathology system and to the method.

A first aspect of the invention relates to an optical imaging device. The optical imaging device comprises a light source, a beam shaping optical arrangement, and a light focusing element. The light source is configured to provide a collimated beam. The beam shaping optical arrangement is configured to transform the collimated beam into a collimated hollow beam. The light focusing element is configured to focus the collimated hollow beam onto a sample for illuminating the sample at an incident angle, thereby generating scattered light to create dark-field image data of the sample. The beam shaping optical arrangement comprises a first optical element and a second optical element. The first optical element is configured to transform the collimated beam into a hollow-cone beam. The second optical element is positioned distally from the first optical element along an optical axis, and configured to transform the hollow-cone beam into the collimated hollow beam. At least one of the first optical element and second optical element is configured to be movable along the optical axis such that a size of the collimated hollow beam is adjustable to illuminate the sample at a variable incident angle.

In other words, it is proposed to obtain microscopy images of samples, such as thick tissue samples, optionally cleared samples, by adjusting the incident angle of an optical imaging device with dark-field imaging capabilities. In addition, the collimated beam is transformed into a collimated hollow beam by using a beam shaping optical arrangement instead of a traditional central aperture. Thus, all light may contribute to the imaging, thereby improving the efficiency in creating the needed illumination light. The traditional dark-field microscopy, on the other hand, blocks the central part of the illumination beam by using a central aperture and thus only a small part of the illumination beam contributes to the imaging.

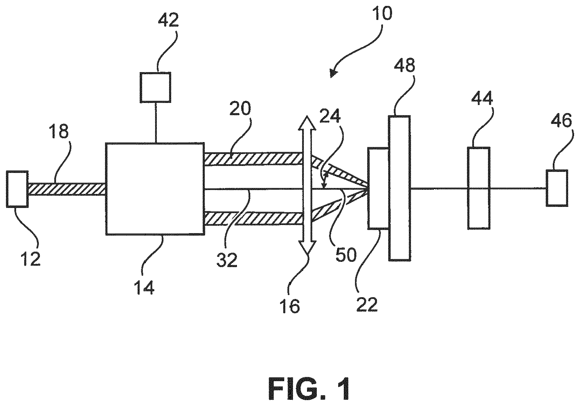

As will be explained hereafter and particularly with respect to the exemplary embodiments in Figs. 1 to 4, by capturing one or more images at the adjusted position, a desired contrast of one or multiple selected feature may be obtained. In an embodiment, the adjustment is performed feature by feature of the sample so that a maximum contrast is obtained for each of them. In an embodiment, the setup is combined with at least one of a bright-field microscope setup and a fluorescence microscope setup.

The "optical imaging device" as used herein may refer to a type of device that uses light and a system of optical components to magnify images of small subjects. For example, the optical imaging device is a microscope. In another example, the optical imaging device is a digital pathology scanner. The light may be ultraviolet (UV), visible (VIS), infrared (IR), and/or near infrared (NIR) light.

The "light source" as used herein may refer to a light source capable of providing a collimated beam. For example, the light source is a laser for providing laser light that is highly collimated. In a further example, the light source is a point source at the focus of a parabolic mirror, which produces a beam of collimated light creating a collimator.

The "first optical element" may be embodied in various manners. In an example, the first optical element is an axicon. In an example, the first optical element is a mirror with a conical surface.

The "second optical element" may also be embodied in various manners. In an example, the second optical element is an axicon. In an example, the second optical element is a parabolic mirror. In a further example, the second optical element is a lens with a surface shape adapted for transforming a hollow-cone beam into a collimated hollow beam.

Various different manners may be used to cause the first and second optical elements to move along the optical axis. For example, at least one of the optical elements is caused to move along a linear path, due to the application of an external magnetic element. Thus, by means of generated magnetic force that acts on the external magnetic elements, the at least one of the optical elements is caused to move. In a further example, piezoelectric elements are applied to at least one of the optical elements. Thus, the at least one of the optical elements is caused to move in response to the applied voltage.

The "hollow-cone beam" as used herein may refer to a cone with a ring-shaped base or a hollow polygonal base. For example, the hollow-cone beam may be a ring-shaped beam with an increasing diameter over a distance. For example, the hollow-cone beam may be a hollow hexagonal-shaped beam with an increasing size over a distance.

The "collimated hollow beam" as used herein may refer to a collimated beam, which has light neither in the central part nor at the external part of the beam, but only in the middle part of the beam. For example, the collimated hollow beam may be a collimated ring-shaped beam. For example, the collimated hollow beam may be a collimated hexagonal-shaped beam with no light at the center part of the beam.

The "incident angle" as used herein refers to the angle between the rotational symmetry axis and the surface of an inverted hollow cone of light that illuminates the sample.

According to an embodiment of the invention, at least one of the first and second optical elements is an axicon.

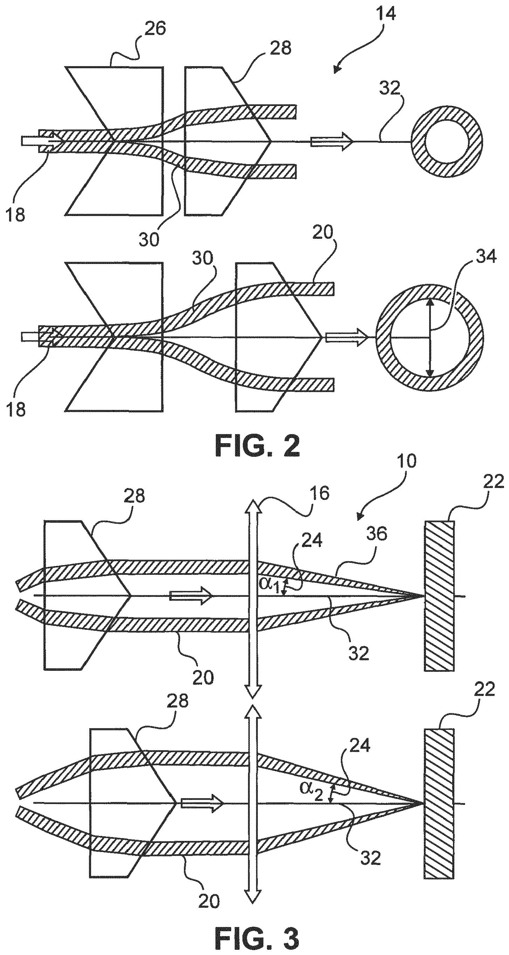

In an example, the first optical element is an axicon and the second optical element is a parabolic mirror. In an example, the first optical element is a mirror with a conical surface and the second optical element is an axicon. In a further example, both optical elements are axicons. This will be explained hereafter and particularly with respect to the exemplary embodiment in Fig. 2.

According to an embodiment of the invention, the first and second optical components are of refractive nature. The beam shaping optical arrangement comprises an expansion chamber arranged between the first and second optical elements. The expansion chamber comprises an index-matching material with a refractive index configured to match that of a material at surfaces of the first and second optical elements.

This may minimize the reflection losses on the two extra surfaces.

Optical components of refractive nature may include e.g. prisms, lenses, or axicons, but not mirrors. The index-matching material may be an index-matching liquid, cement, or gel. This will be explained hereafter and particularly with respect to the exemplary embodiment in Fig. 3.

According to an embodiment of the invention, the device further comprises a controller, an image sensor, and a processor. The controller is operatively coupled to at least one of the first and second optical elements of the beam shaping optical arrangement and configured to control the at least one of the first and second optical elements to move along the optical axis to adjust the incident angle. The image sensor is configured to detect light scattered from the sample to create dark-field image data of the sample. The processor is configured to analyse a contrast of a selected feature in the dark-field image data of the sample. The controller is configured to control at least one of the first and second optical elements of the beam shaping optical arrangement to move along the optical axis to illuminate the sample at a further incident angle, until a desired contrast of the selected feature is obtained.

In other words, the adjustment is performed feature by feature of the sample so that a maximum contrast is obtained for each of them. This will be explained hereafter and particularly with respect to the exemplary embodiment in Fig. 1.

The "controller" as used herein may refer to a data processing element such as a microprocessor, microcontroller, field programmable gate array (FPGA), central processing unit (CPU), digital signal processor (DSP) capable of providing activation signal to at least one of the first and second optical elements to cause it to move along the optical axis. For example, in case that piezoelectric elements are applied to at least one of the first and second optical elements, the controller is capable of providing activation signal in form of applied voltage to the piezoelectric elements such that the first and/or second optical elements is caused to move. The controller is capable of providing activation signals to the first and/or second optical elements via a universal service bus (USB), a local area network connection (LAN), or another form of data connection.

The "image sensor" as used herein may refer to an electronic element capable of converting the light intensity incident on the element into proportional electronic signals representative of the dark-field, bright-field, or fluorescence light received from the sample. Such an image sensor is implemented using, for example, a charge-coupled device or a CMOS imaging sensor, coupled to appropriate analogue and/or signal processing circuitry.

The "processor" as used herein may refer to a data processing element capable of processing image data, e.g. dark-field image data, fluorescence image, and bright-field image data. The processor is capable of receiving digital image data from the image sensor via the USB, a LAN, or another form of data connection.

According to an embodiment of the invention, the controller is configured to control at least one of the first and second optical elements of the beam shaping optical arrangement to move along the optical axis to illuminate the sample at multiple incident angles to create multiple dark-field image data of the sample. The processor is configured to combine the multiple dark-field image data such that a desired contrast is obtained for a plurality of selected features of the sample.

In a given sample, a certain feature might be optimally imaged at a given angle, whilst another feature would have a different best contrast angle, related to the refractive index change across that part of the tissue. It is thus beneficial to image the sample at various incident angles and perform differential image analysis, by using different operations between the images captured at different incident angles - superposition, subtraction, etc.

According to an embodiment of the invention, the device further comprises a bright-field light source for providing bright-field light and a first optical arrangement configured to direct bright-field light towards the sample for generating transmitted light. Alternatively or additionally, the device comprises an excitation light source for providing excitation light and a second optical arrangement configured to direct excitation light towards the sample for generating fluorescence light. The image sensor is configured to detect the transmitted light and/or the fluorescence light to create bright-field image data and/or fluorescence image data of the sample.

In other words, the optical imaging device is able to be operated in a bright-field imaging mode and/or a fluorescence imaging mode.

The advantage of using variable dark-field imaging in combination with bright-field imaging may be that the contrast enhancement works differently in dark-field imaging then bright-field imaging. In dark-field imaging the most scattering membrane give the brightest signal while they would be the weakest in the bright-field imaging. Combining these two imaging modes may thus give extra information about the tissue. They may lead, for instance, to a better assessment of where the duct, tubuli or open cavities are within the tissue being imaged.

The advantage of using variable angle dark-field imaging in combination with fluorescence imaging may be that it is possible to detect and to visualise the 3-D morphology or tissue architecture of a biopsy. Boundaries and internal cavities of biopsy material may be identified using a combination of dark-field imaging and fluorescence imaging. This means that a single staining can be used to image cancer cells within a biopsy, for example, and their growth pattern, and that the invasiveness can be assessed in comparison to the bright-field image, because cancer, for example, typically arises at the epithelial cell layers, which line tubuli or ducts in a tissue.

The optical imaging device may comprise a switch for activating the dark-field imaging mode, the bright-field imaging mode and/or the fluorescence imagine mode in a time-interleaved manner. For example, the switch may be operatively coupled to the various light sources, and active these light sources in a time-interleaved manner to obtain dark-field image data, bright-field image data, and/or fluorescence image data in a sequential manner. In a further example, the mode switching between dark-field imaging, bright-field imaging, and/or fluorescence imaging is performed via a mechanical action, for example, where the fluorescence imaging filters are removed from the optical path.

The "bright-field light source" as used herein may refer to a light source, e.g. a white light source or one or multiple LED light source, optionally arranged on an opposite side of a sample to an imaging means. When the bright-field light source is actuated, its radiation penetrates through sample and the transmitted light is detected by the image sensor for generating bright-field image data of the sample.

The "excitation light source" as used herein may refer to a light source, e.g. an LED light source, capable of providing excitation light matched to a fluorescence dye. Optionally, a plurality of excitation light sources, each targeted to a different type of fluorescence dye, may be provided.

The second optical arrangement may comprise a dichroic filter, an emission filter, and/or an excitation filter.

According to an embodiment of the invention, the device further comprises a sample stage for holding a sample. At least one of the light focusing element and the sample stage is configured to be movable along an optical path in a depth direction to create dark-field image data, optionally in combination with bright-field image data, and/or fluorescence image data at multiple focal planes within the sample. The processor is configured to register at least two image data of the dark-field image data, the bright-field image data, and the fluorescence image data captured at the same focal plane within the sample.

Accordingly, a wide range of depth regions of a sample may be imaged. The dark-field image data may be combined with bright-field image data and/or fluorescence image data to obtain more information for one or multiple selected features.

A second aspect of the present invention relates to a method of operating an optical imaging device. The method comprises the step of providing a collimated beam by activating a light source. The method comprises an additional step of transforming the collimated beam into a collimated hollow beam by using a beam shaping optical arrangement, which comprises a first optical element configured to transform the collimated beam into a hollow-cone beam, and a second optical element positioned distally from the first optical element along an optical axis, and configured to transform the hollow-cone beam into the collimated hollow beam. The method comprises a further step of focusing the collimated hollow beam onto a sample by using a light focusing element to illuminate the sample at an incident angle for generating scattered light to create dark-field image data of the sample. At least one of the first optical element and second optical element is configured to be movable along the optical axis such that a size of the collimated hollow beam is adjustable to illuminate the sample at a variable incident angle.

Accordingly, it is possible to illuminate a sample at different incident angles. This may also improve the efficiency in creating the needed illumination light.

According to an embodiment of the invention, the method further comprises detecting light scattered from the sample to create dark-field image data of the sample, analysing a contrast of a selected feature in the dark-field image data of the sample, and controlling at least one of the first and second optical elements of the beam shaping optical arrangement to move along the optical axis to illuminate the sample at a further incident angle, until a desired contrast of the selected feature is obtained.

Accordingly, it is possible to adjust the incident angle to obtain a desired contrast for a selected feature.

According to an embodiment of the invention, the method further comprises the steps of controlling at least one of the first and second optical elements of the beam shaping optical arrangement to move along the optical axis to illuminate the sample at multiple incident angles to create multiple dark-field image data of the sample, and combining the multiple dark-field image data such that a desired contrast is obtained for a plurality of selected features of the sample.

Accordingly, it is possible to obtain a desired contrast for multiple selected features.

According to an embodiment of the invention, the method further comprises the following steps for operating the optical imaging device. In a bright-field imaging mode, bright-field light is provided by activating a bright-field light source. The bright-field light is directed towards the sample using a first optical arrangement for generating transmitted light. The transmitted light is detected using an image sensor to create bright-field image data of the sample. Alternatively or additionally, in a fluorescence imaging mode, excitation light is provided by activating an excitation light source. The excitation light is directed towards the sample using a second optical arrangement for generating fluorescence light. The fluorescence light is detected using an image sensor to create fluorescence image data of the sample.

This may allow the optical imaging device to be operable in multiple imaging modes. The fluorescence may be used in epifluorescence mode.

According to an embodiment of the invention, the method comprises the step of moving at least one of the light focusing element and the sample stage along an optical path in a depth direction to create dark-field image data, optionally in combination with bright-field image data, and/or fluorescence image data at multiple focal planes within the sample. The method further comprises the step of registering at least two image data of the dark-field image data, the bright-field image data, and the fluorescence image data captured at the same focal plane within the sample.

In other words, successive slices captured at different focal planes may make up a "z-stack", which can either be processed by certain software to create a three-dimensional image, or it is merged into a two-dimensional stack. Two different image data may be registered to obtain more information about one or multiple selected features.

A third aspect of the invention relates to a digital pathology system. The digital pathology system comprises an optical imaging device as described above and below, which, in operation, is configured to perform the method steps as described above and below, and a user interface. The user interface is configured to receive dark-field image data, bright-field image data, and/or fluorescence image data from the optical imaging device, and to display the dark-field image data, bright-field image data, fluorescence image data alone, or as a registered combination of at least two image data.

A fourth aspect of the invention relates to a computer program element for controlling an optical imaging device as described above and below, which, when being executed by a processing unit, is adapted to carry out the step of operating the optical imaging device.

A fifth aspect of the invention relates to a computer readable medium having stored the computer program element.

According to another aspect of the invention, a dark field imaging method is proposed that makes use a variable incidence angle of imaging light. The imaging angle can be chosen such that the best or desired contrast of a selected feature is achieved or several angles imaging can be combined to reveal different features of a sample. The optical imaging device may also be operable in a bright-field imaging mode and/or a fluorescence imaging mode. Combining the variable angle dark-field imaging and bright-field imaging may thus give extra information about e.g. tissue. This may lead, for instance, to a better assessment of where the tubuli are within the tissue being imaged. optical imaging device is operable in a bright-field imaging mode and/or a fluorescence imaging mode. The advantage of using variable angle dark-field imaging in combination with fluorescence imaging may be that it is possible to detect and to visualise the 3-D morphology of a biopsy.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the following drawings:
Fig. 1 shows a schematic drawing of an optical imaging device according to an exemplary embodiment of the present disclosure.
Fig. 2 shows a schematic drawing of a beam shaping optical arrangement according to an exemplary embodiment of the present disclosure.
Fig. 3 shows a schematic drawing of an optical imaging device according to a further exemplary embodiment of the present disclosure.
Fig. 4 shows a schematic drawing of a beam shaping arrangement according to another exemplary embodiment of the present disclosure.
Fig. 5 shows a schematic drawing of a method according to an exemplary embodiment of the present disclosure.
Fig. 6 shows a schematic drawing of a method according to another exemplary embodiment of the present disclosure.
Fig. 7 shows a schematic drawing of a method according to a further exemplary embodiment of the present disclosure.
Fig. 8 shows a schematic drawing of a method according to a further exemplary embodiment of the present disclosure.
Fig. 9 shows a schematic drawing of a method according to a further exemplary embodiment of the present disclosure.
Fig. 10 shows a schematic drawing of a method according to a further exemplary embodiment of the present disclosure.
Fig. 11 shows a schematic drawing of a digital pathology system according to an exemplary embodiment of the present disclosure.

### DETAILED DESCRIPTION OF EMBODIMENTS

Fig. 1 schematically shows an optical imaging device 10. The optical imaging device 10 comprises a light source 12, a beam shaping optical arrangement 14, and a light focusing element 16. The light source 12 is configured to provide a collimated beam 18. The collimated beam 18 may be a collimated monochromatic beam. For example, the light source 12 is a laser. In another example, the light source is a point source at the focus of a parabolic mirror, which produces a beam of collimated light creating a collimator. The beam shaping optical arrangement 14 is configured to transform the collimated beam 18 into a collimated hollow beam 20. The light focusing element 16 is configured to focus the collimated hollow beam 20 onto a sample 22 for illuminating the sample 22 at an incident angle 24, thereby generating scattered light to create dark-field image data of the sample 22. The light focusing element 16 may be a lens.

Fig. 2 schematically shows a beam shaping optical arrangement 14 according to an exemplary embodiment of the present disclosure. The beam shaping optical arrangement 14 comprises a first optical element 26 and a second optical element 28. The first optical element 26 is configured to transform the collimated beam 18 into a hollow-cone beam 30. The second optical element 28 is positioned distally from the first optical element 26 along an optical axis 32, and configured to transform the hollow-cone 30 into the collimated hollow beam 20. At least one of the first optical element 26 and second optical element 28 is configured to be movable along the optical axis 32 such that a size 34 of the collimated hollow beam 20, e.g. a diameter of a collimated ring-shaped beam, is adjustable to illuminate the sample 22 at a variable incident angle 24.

This may advantageously allow obtaining microscopy images of a sample, e.g. a thick tissue sample (few hundreds of micrometers and more), by adjusting the incident angle of the illuminating light such that different contrast can be obtained for a selected feature of the sample. It is thus possible to obtain an image with a desired contrast. In addition, the use of beam shaping optical arrangement instead of a traditional central aperture is also beneficial for improving the efficiency in creating the needed illumination light.

The first optical element 26 may be e.g. an axicon or a mirror with a conical surface. The second optical element 28 may be e.g. a parabolic mirror, an axicon, or a lens with a special surface shape for transforming a hollow-cone beam into a collimated hollow beam. Optionally, at least one of the first optical element 26 and the second optical element 28 is an axicon. For example, the first optical element 26 is an axicon and the second optical element 28 is a parabolic mirror. As a further option, as shown in Fig. 2, both the first optical element 26 and the second optical element 28 are axicons. The facets of the both axicons may have an anti-reflective coating. Piezoelectric elements (not shown) may be attached to at least one of the first optical element 26 and the second optical element 28 to cause it to move in response to an applied voltage.

Fig. 3 schematically shows an optical imaging device 10 according to an exemplary embodiment of the present disclosure. The collimated hollow beam 20 is transformed into an inverted hollow cone of light 36 after passing the light focusing element 16, such as a lens as shown in Fig. 3. The bottom figure shows an increasing size of the collimated hollow beam 20 because of the increasing distance between the first optical element 26 and the second optical element 28. As the focal length of the light focusing element 16 is fixed, the incident angle 24, i.e. the angle between the rotational symmetry axis and the surface of the inverted hollow cone of light 36 also increases.

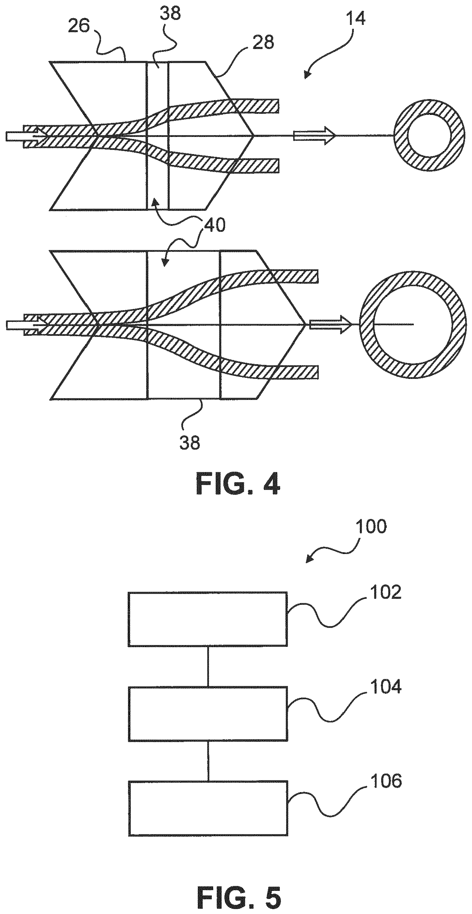

Fig. 4 schematically shows a beam shaping optical arrangement 14 according to an exemplary embodiment of the present disclosure. When the first optical element 26 and the second optical element 28 are of refractive nature, such as two axicons as shown in Fig. 4, the beam shaping optical arrangement 14 may optionally comprise an expansion chamber 38 arranged between the first optical element 26 and second optical element 28. The expansion chamber 38 comprises an index-matching material 40 with a refractive index configured to match that of a material at surfaces of the first optical element 26 and the second optical element 28. The index-matching material 40 may be an index-matching liquid, cement, or gel. This may advantageously minimize the reflection losses on the two extra surfaces.

Turning to Fig. 1, the optical imaging device 10 may further comprise a controller 42, an image sensor 44, and a processor 46. The controller 42 is operatively coupled to at least one of the first 26 and second optical elements 28 of the beam shaping optical arrangement 14, e.g. via a physical cable or wirelessly, and configured to control the at least one of the first 26 and second optical elements 28 to move along the optical axis 32 to adjust the incident angle 24. The image sensor 44, e.g. a camera, a CMOS imaging sensor or a charge-coupled device, is configured to detect light scattered from the sample 22 to create dark-field image data of the sample. The processor 46 is configured to analyse a contrast of a selected feature in the dark-field image data of the sample 22. The controller 42 is configured to control at least one of the first 26 and second optical elements 28 of the beam shaping optical arrangement 14 to move along the optical axis 32 to illuminate the sample at a further incident angle 24, until a desired contrast of the selected feature is obtained. Fig. 3 shows an example of adjusting incident angle for obtaining a different contrast of a selected feature. Hence, by changing the incident angle, it is possible to find a desired or best contrast for a selected feature in the dark-field imaging data. This may be beneficial for obtaining a maximum contrast for a selected feature of a sample.

An imaging objective (not shown) may be provided and arranged before the image sensor 44. If the image sensor 44 is a camera, the camera may also have a camera lens element between the imaging objective and camera. Imaging objective may be needed for microscopic application. For macroscopic application, however, the camera lens is sufficient and the imaging objective is not required.

Optionally, the controller 42 is configured to control at least one of the first 26 and second optical elements 28 of the beam shaping optical arrangement 14 to move along the optical axis 32 to illuminate the sample 22 at multiple incident angles 24 to create multiple dark-field image data of the sample 22. The processor 46 is configured to combine the multiple dark-field image data such that a desired contrast is obtained for a plurality of selected features of the sample 22. By illuminating the sample at a plurality of incident angles and combing the dark-field image data, it is possible to have desired contrasts for multiple selected features.

As a further option (not shown), the optical imaging device 10 may be configured to operate in a bright-field imaging mode and/or a fluorescence imaging mode. In an example, the optical imaging device 10 may comprise a bright-field light source for providing bright-field light and a first optical arrangement configured to direct bright-field light towards the sample for generating transmitted light. In another example, the optical imaging device 10 may comprise an excitation light source for providing excitation light and a second optical arrangement, which may include a dichroic filter, an emission filter, and/or an excitation filter, configured to direct excitation light towards the sample for generating fluorescence light. The image sensor is configured to detect the transmitted light and/or the fluorescence light to create bright-field image data and/or fluorescence image data of the sample. In a further example, the optical imaging device 10 is provided with both bright-field imaging mode and fluorescence imaging mode. The mode switching between dark-field imaging, bright-field imaging, and/or fluorescence imaging is performed via a mechanical action, for example, where the fluorescence imaging filters are removed from the optical path.

As a further option, as shown in Fig. 1, the optical imaging device 10 may further comprise a sample stage 48 for holding a sample 22. At least one of the light focusing element 16 and the sample stage 48 is configured to be movable along an optical path 50 in a depth direction to create dark-field image data, optionally in combination with bright-field image data, and/or fluorescence image data at multiple focal planes within the sample. The processor 46 is configured to register at least two image data of the dark-field image data, the bright-field image data, and the fluorescence image data captured at the same focal plane within the sample 22. This may allow imaging a wide range of depth regions of a sample for dark-field imaging. In addition, the combination of at least two image data may provide more information for a feature of the sample.

Fig. 5 schematically shows a method 100 of operating an optical imaging device 10 as described above and below according to an exemplary embodiment of the present disclosure, which may improve the efficiency in creating the need illumination light and allow adjustable illumination angle during a measurement or scan in dark-field imaging. In step 102, a collimated beam is provided by activating a light source, such as a laser. In step 104, the collimated beam is transformed into a collimated hollow beam by using a beam shaping optical arrangement. The beam shaping optical arrangement comprises a first optical element configured to transform the collimated beam into a hollow-cone beam. The first optical element may be an axicon or a mirror with a conical surface. A second optical element is positioned distally from the first optical element along an optical axis, and configured to transform the hollow-cone beam. The second optical element may be e.g. a parabolic mirror. At least one of the first optical element and second optical element is configured to be movable along the optical axis such that a size of the collimated hollow beam is adjustable to illuminate the sample at a variable incident angle. In step 106, the collimated hollow beam is focused onto a sample by using a light focusing element, e.g. a lens, to illuminate the sample at an incident angle for generating scattered light to create dark-field image data of the sample.

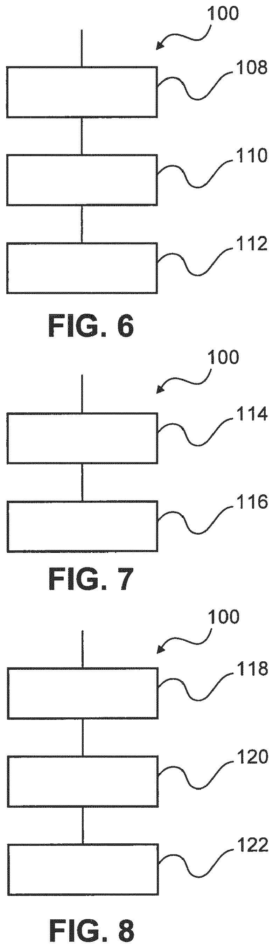

Fig. 6 schematically shows a method 100 according another exemplary embodiment of the present disclosure, which may allow obtaining a desired contrast for a selected feature of the sample. In step 108, light scattered from the sample is detected to create dark-field image data of the sample, e.g. by using a CMOS image sensor or a camera. In step 110, a contrast of a selected feature is analysed in the dark-field image data of the sample. In step 112, at least one of the first and second optical elements of the beam shaping optical arrangement is controlled to move along the optical axis to illuminate the sample at a further incident angle, until a desired contrast of the selected feature is obtained.

Fig. 7 schematically shows a method 100 according to a further exemplary embodiment of the present disclosure, which may allow obtaining a desired contrast for multiple selected features of the sample. In step 114, at least one of the first and second optical elements of the beam shaping optical arrangement is controlled to move along the optical axis to illuminate the sample at multiple incident angles to create multiple dark-field image data of the sample. In step 116, the multiple dark-field image data are combined such that a desired contrast is obtained for a plurality of selected features of the sample. Differential image analysis may be performed, by using different operations between the images captured at different incident angles - superposition, subtraction, etc.

Fig. 8 schematically shows a method 100 according to a further exemplary embodiment of the present disclosure, which may allow the optical imaging device to operate in a bright-field imaging mode. In step 118, bright-field light is provided by activating a bright-field light source, e.g. an LED light source or a white light source. In step 120, the bright-field light is directed towards the sample using a first optical arrangement for generating transmitted light. In step 122, the transmitted light is detected using an image sensor to create bright-field image data of the sample.

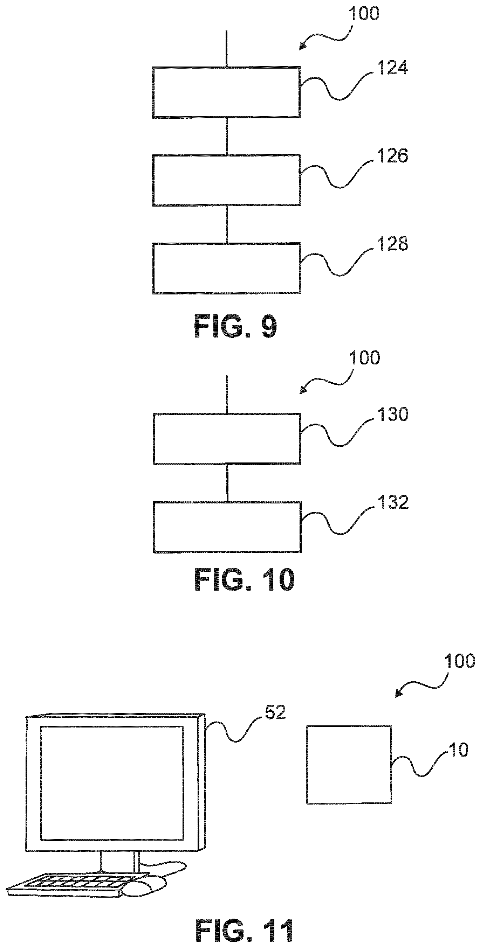

Fig. 9 schematically shows a method 100 according to a further exemplary embodiment of the present disclosure, which may allow the optical imaging device to operate in a fluorescence imaging mode. In step 124, excitation light is provided by activating an excitation light source, e.g. an LED light source. In step 126, the excitation light is directed towards the sample using a second optical arrangement for generating fluorescence light. In step 128, the fluorescence light is detected using an image sensor to create fluorescence image data of the sample.

Fig. 10 schematically shows a method 100 according to a further exemplary embodiment of the present disclosure, which may allow successive slices making up a "z-stack" to create a three-dimensional image of the sample and a combination of multiple image data to obtain additional information for selected features. In step 130, at least one of the light focusing element and the sample stage is moved along an optical path in a depth direction to create dark-field image data, optionally in combination with bright-field image data, and/or fluorescence image data at multiple focal planes within the sample. In step 132, at least two image data of the dark-field image data, the bright-field image data, and the fluorescence image data captured at the same focal plane within the sample are registered.

Fig. 11 schematically shows a digital pathology system 100 according to an exemplary embodiment of the present disclosure. The digital pathology system 100 comprises an optical imaging device 10 as described above and below, which, in operation, is configured to perform the method steps 100 as described above and below, and a user interface 52. The user interface 52 is configured to receive dark-field image data, bright-field image data, and/or fluorescence image data from the optical imaging device, and to display the dark-field image data, bright-field image data, fluorescence image data alone, or as a registered combination of at least two image data. For example, as shown in Fig. 8, the user interface 52 is a personal computer (PC) connected to the optical imaging device using a USB connection, or over a LAN. The PC is configured to execute image processing software to display the bright-field image data and/or the fluorescence image data.

In another exemplary embodiment of the present invention, a computer program or a computer program element is provided that is characterized by being adapted to execute the method steps of the method according to one of the preceding embodiments, on an appropriate system.

The computer program element might therefore be stored on a computer unit, which might also be part of an embodiment of the present invention. This computing unit may be adapted to perform or induce a performing of the steps of the method described above. Moreover, it may be adapted to operate the components of the above described apparatus. The computing unit can be adapted to operate automatically and/or to execute the orders of a user. A computer program may be loaded into a working memory of a data processor. The data processor may thus be equipped to carry out the method of the invention.

This exemplary embodiment of the invention covers both, a computer program that right from the beginning uses the invention and a computer program that by means of an up-date turns an existing program into a program that uses the invention.

Further on, the computer program element might be able to provide all necessary steps to fulfil the procedure of an exemplary embodiment of the method as described above.

According to a further exemplary embodiment of the present invention, a computer readable medium, such as a CD-ROM, is presented wherein the computer readable medium has a computer program element stored on it which computer program element is described by the preceding section.

A computer program may be stored and/or distributed on a suitable medium, such as an optical storage medium or a solid state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. An optical imaging device (10), comprising:
- a light source (12);
- a beam shaping optical arrangement (14); and
- a light focusing element (16);
wherein the light source is configured to provide a collimated beam (18);
wherein the beam shaping optical arrangement is configured to transform the collimated beam into a collimated hollow beam (20);
wherein the light focusing element is configured to focus the collimated hollow beam onto a sample (22) for illuminating the sample at an incident angle (24), thereby generating scattered light to create dark-field image data of the sample;
wherein the beam shaping optical arrangement comprises a first optical element (26) and a second optical element (28);
wherein the first optical element is configured to transform the collimated beam into a hollow-cone beam (30);
wherein the second optical element is positioned distally from the first optical element along an optical axis (32), and configured to transform the hollow-cone beam into the collimated hollow beam; and
wherein at least one of the first optical element and second optical element is configured to be movable along the optical axis such that a size (34) of the collimated hollow beam is adjustable to illuminate the sample at a variable incident angle.

2. Device according to claim 1,
wherein at least one of the first and second optical elements is an axicon.

3. Device according to claim 1 or 2,
wherein the first and second optical elements are of refractive nature;
wherein the beam shaping optical arrangement comprises an expansion chamber (38) arranged between the first and second optical elements; and
wherein the expansion chamber comprises an index-matching material (40) with a refractive index configured to match that of a material at surfaces of the first and second optical elements.

4. Device according to any of claims 1 to 3, further comprising:
- a controller (42);
- an image sensor (44); and
- a processor (46);
wherein the controller is operatively coupled to at least one of the first and second optical elements of the beam shaping optical arrangement and configured to control the at least one of the first and second optical elements to move along the optical axis to adjust the incident angle;
wherein the image sensor is configured to detect light scattered from the sample to create dark-field image data of the sample;
wherein the processor is configured to analyse a contrast of a selected feature in the dark-field image data of the sample; and
wherein the controller is configured to control at least one of the first and second optical elements of the beam shaping optical arrangement to move along the optical axis to illuminate the sample at a further incident angle, until a desired contrast of the selected feature is obtained.

5. Device according to claim 4, wherein controller is configured to control at least one of the first and second optical elements of the beam shaping optical arrangement to move along the optical axis to illuminate the sample at multiple incident angles to create multiple dark-field image data of the sample; and
wherein the processor is configured to combine the multiple dark-field image data such that a desired contrast is obtained for a plurality of selected features of the sample.

6. Device according to any of the preceding claims, further comprising:
- a bright-field light source for providing bright-field light, and a first optical arrangement configured to direct bright-field light towards the sample for generating transmitted light; and/or
- an excitation light source for providing excitation light, and a second optical arrangement configured to direct excitation light towards the sample for generating fluorescence light;
wherein the image sensor is configured to detect the transmitted light and/or the fluorescence light to create bright-field image data and/or fluorescence image data of the sample.

7. Device according to any of claims 1 to 6,
- a sample stage (48) for holding a sample;
wherein at least one of the light focusing element and the sample stage is configured to be movable along an optical path (50) in a depth direction to create dark-field image data, optionally in combination with bright-field image data, and/or fluorescence image data at multiple focal planes within the sample; and
wherein the processor is configured to register at least two image data of the dark-field image data, the bright-field image data, and the fluorescence image data captured at the same focal plane within the sample.

8. A method (100) of operating an optical imaging device, comprising the following steps:
- providing (102) a collimated beam by activating a light source;
- transforming (104) the collimated beam into a collimated hollow beam by using a beam shaping optical arrangement, wherein the beam shaping optical arrangement comprises:
- a first optical element configured to transform the collimated beam into a hollow-cone beam; and
- a second optical element positioned distally from the first optical element along an optical axis, and configured to transform the hollow-cone beam into the collimated hollow beam; and
- focusing (106) the collimated hollow beam onto a sample by using a light focusing element to illuminate the sample at an incident angle for generating scattered light to create dark-field image data of the sample;
wherein at least one of the first optical element and second optical element is configured to be movable along the optical axis such that a size of the collimated hollow beam is adjustable to illuminate the sample at a variable incident angle.

9. Method according to claim 8, further comprising:
- detecting (108) light scattered from the sample to create dark-field image data of the sample;
- analysing (110) a contrast of a selected feature in the dark-field image data of the sample; and
- controlling (112) at least one of the first and second optical elements of the beam shaping optical arrangement to move along the optical axis to illuminate the sample at a further incident angle, until a desired contrast of the selected feature is obtained.

10. Method according to claim 8 or 9, further comprising:
- controlling (114) at least one of the first and second optical elements of the beam shaping optical arrangement to move along the optical axis to illuminate the sample at multiple incident angles to create multiple dark-field image data of the sample; and
- combining (116) the multiple dark-field image data such that a desired contrast is obtained for a plurality of selected features of the sample.

11. Method according to any of claims 8 to 10, further comprising the following steps for operating the optical imaging device:
A) in a bright-field imaging mode,
- providing (118) bright-field light by activating a bright-field light source;
- directing (120) the bright-field light towards the sample using a first optical arrangement for generating transmitted light;
- detecting (122) the transmitted light using an image sensor to create bright-field image data of the sample; and/or
B) in a fluorescence imaging mode,
- providing (124) excitation light by activating an excitation light source;
- directing (126) the excitation light towards the sample using a second optical arrangement for generating fluorescence light; and
- detecting (128) the fluorescence light using an image sensor to create fluorescence image data of the sample.

12. Method according to any of claims 8 to 11, further comprising:
- moving (130) at least one of the light focusing element and the sample stage along an optical path in a depth direction to create dark-field image data, optionally in combination with bright-field image data, and/or fluorescence image data at multiple focal planes within the sample; and
- registering (132) at least two image data of the dark-field image data, the bright-field image data, and the fluorescence image data captured at the same focal plane within the sample.

13. A digital pathology system, comprising:
- an optical imaging device as claimed in one of the claims 1 to 7, which, in operation, is configured to perform the method steps of the claims 8 to 12, and
- a user interface;
wherein the user interface is configured to receive dark-field image data, bright-field image data, and/or fluorescence image data from the optical imaging device, and to display the dark-field image data, bright-field image data, fluorescence image data alone, or as a registered combination of at least two image data.

14. Computer program element for controlling a device according to one of the claims 1 to 7, which, when being executed by a processing unit, is adapted to perform the method steps of one of the claims 8 to 12.

15. A computer readable medium having stored the computer program element of claim 14.
